# EUROPEAN PATENT APPLICATION

(11) **EP 4 304 265 A1**
(43) Date of publication of application: **10.01.2024**
(21) Application number: 21929074.9
(22) Date of filing: 04.03.2021
(51) Int. Cl.: H04W 72/04, H04W 72/08

(54) **TERMINAL AND COMMUNICATION METHOD**

(71) Applicant: NTT DOCOMO, INC., Chiyoda-ku Tokyo 100-6150 (JP)
(72) Inventor: HARADA, Kouhei, Tokyo 100-6150 (JP); HANAKI, Akihito, Tokyo 100-6150 (JP)
(74) Representative: Hoffmann Eitle
(86) International application number: PCT/JP2021/008576
(87) International publication number: WO 2022/185502

(57) **Abstract**

A terminal includes a communication unit configured to perform communication to which dual connectivity is applied with a base station; a reception unit configured to receive, from the base station, an indication for deactivating a secondary cell group; and a control unit configured to deactivate the secondary cell group, wherein in a case where a terminal-triggered secondary cell group activation occurs, the control unit controls activation of the secondary cell group, based on a measurement result of a most recently measured synchronization signal or reference signal of a primary secondary cell group cell.

## Description

### TECHNICAL FIELD

The present invention relates to a terminal and a communication method in a radio communication system.

### BACKGROUND ART

In the 3rd Generation Partnership Project (3GPP), a radio communication system referred to as 5G or New Radio (NR) (in the following, the radio communication system is referred to as "NR") is being discussed, in order to achieve a further increase in system capacity, a further increase in a data transmission rate, a further reduction of latency in a radio section, and the like. In 5G, in order to meet the requirements of achieving a throughput of 10 Gbps or more and keeping the delay in wireless sections to 1 ms or less, various radio technologies and various types of network architecture have been discussed. (e.g., Non-patent literature 1).

Furthermore, in the 3GPP standardization, a function of performing activation/deactivation of a secondary cell group in dual connectivity operation (e.g., non-patent literature 2) is being discussed with the primary objective of reducing terminal power consumption. For example, operations that are not performed in a state in which the secondary cell group is deactivated are specified to reduce power consumption.

### [RELATED-ART DOCUMENTS]

### [Non-Patent Documents]

[Non-Patent Document 1] 3GPP TS 38.300 V16.4.0 (2020-12)
[Non-Patent Document 2] 3GPP TS 37.340 V16.4.0 (2020-12)

### DISCLOSURE OF INVENTION

### PROBLEMS TO BE SOLVED BY THE INVENTION

In a communication to which dual connectivity is applied, in a case where RLM (Radio Link Monitoring) is not performed in the secondary cell group that is in a deactivated state, when reactivation of the secondary cell group is performed, there is a possibility that the terminal is located outside the area of the secondary cell group. Here, according to the conventional techniques, the terminal performs an operation in which the secondary cell group is released after the failure of the random access procedure, and thus, there is concern that the delay will be prolonged to the release of the secondary cell group and that power consumption will increase.

The present invention has been made in view of the above described point, and it is an object of the present invention to improve the performance during communication according to dual connectivity in a radio communication system.

### MEANS FOR SOLVING THE PROBLEMS

According to the disclosed technology, a terminal includes: a communication unit configured to perform communication to which dual connectivity is applied; a reception unit configured to receive, from the base station, an indication for deactivating a secondary cell group; and a control unit configured to deactivate the secondary cell group, wherein in a case where a terminal-triggered secondary cell group activation occurs, the control unit controls activation of the secondary cell group, based on a measurement result of a most recently measured synchronization signal or reference signal of a primary secondary cell group cell.

### ADVANTAGEOUS EFFECT OF THE INVENTION

According to the disclosed technology, in a radio communication system, performance during communication according to dual connectivity can be improved.

### BRIEF DESCRIPTION OF THE DRAWINGS

[Fig. 1] Fig. 1 is a diagram illustrating an example (1) of a radio communication system according to an embodiment of the present invention.
[Fig. 2] Fig. 2 is a diagram illustrating an example (2) of a radio communication system according to an embodiment of the present invention.
[Fig. 3] Fig. 3 is a diagram illustrating an example of communication with dual connectivity.
[Fig. 4] Fig. 4 is a flowchart illustrating an example of operation with respect to a secondary cell group according to an embodiment of the present invention.
[Fig. 5] Fig. 5 is a diagram illustrating an example of a functional configuration of a base station 10 according to an embodiment of the present invention.
[Fig. 6] Fig. 6 is a diagram illustrating an example of a functional configuration of a terminal 20 according to an embodiment of the present invention.
[Fig. 7] Fig. 7 is a diagram illustrating an example of a hardware configuration of the base station 10 or the terminal 20 according to an embodiment of the present invention.

### DESCRIPTION OF EMBODIMENTS

In the following, one or more embodiments of the present invention will be described with reference to the drawings. It should be noted that the embodiments described below are examples, and the embodiments to which the present invention is applied is not limited to the following embodiments.

In operations of a radio communication system according to an embodiment of the present invention, conventional techniques will be used as appropriate. The conventional techniques are, but are not limited to, the existing NR or LTE.

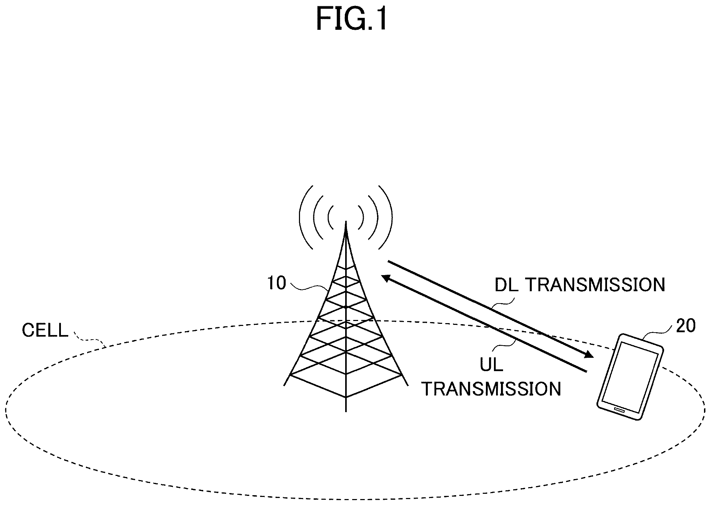

Fig. 1 is a diagram illustrating an example (1) of a radio communication system according to an embodiment of the present invention. The radio communication system according to an embodiment of the present invention includes a base station 10 and a terminal 20 as illustrated in Fig. 1. A single base station 10 and a single terminal 20 are illustrated in Fig. 1, but this configuration is an example, and the number of each of the base station 10 and the terminal 20 may be two or more.

The base station 10 is a communication device that provides one or more cells and performs wireless communication with the terminal 20. The physical resources of the radio signal are defined in the time domain and the frequency domain, the time domain may be defined by the number of OFDM symbols, and the frequency domain may be defined by the number of subcarriers or the number of resource blocks. The Transmission Time Interval (TTI) in the time domain may be a slot, and the TTI may be a subframe.

The base station 10 can perform carrier aggregation by bundling multiple cells (multiple CCs (component carriers)) to communicate with the terminal 20. In carrier aggregation, a single PCell (primary cell) and one or more SCells (secondary cells) are used.

The base station 10 transmits a synchronization signal, system information, and the like to the terminal 20. Synchronization signals are, for example, NR-PSS, and NR-SSS. System information is transmitted by NR-PBCH or PDSCH, for example, and is also called broadcast information. As illustrated in Fig. 1, the base station 10 transmits control signals or data to the terminal 20 at DL (Downlink), and receives control signals or data from the terminal 20 at UL (Uplink). Here, what is transmitted on a control channel such as PUCCH or PDCCH is called a control signal, and what is transmitted on a shared channel such as PUSCH or PDSCH is called data, but such a name is an example.

The terminal 20 is a communication device equipped with a radio communication function such as a smartphone, a mobile phone, a tablet, a wearable terminal, and a machine-to-machine (M2M) communication module. As illustrated in Fig. 1, the terminal 20 utilizes various communication services provided by the radio communication system by receiving control signals or data from the base station 10 at DL and transmitting control signals or data to the base station 10 at UL. Note that the terminal 20 may be called UE and the base station 10 may be called gNB.

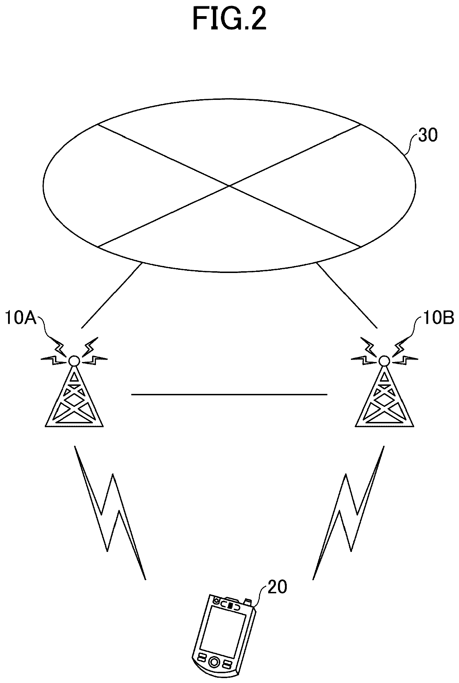

Fig. 2 is a diagram illustrating an example (2) of a radio communication system according to an embodiment of the present invention. Fig. 2 illustrates a configuration example of a radio communication system when dual connectivity (DC) is implemented. As illustrated in Fig. 2, a base station 10A serving as a master node (MN) and a base station 10B serving as a secondary node (SN) are provided. The base stations 10A and 10B are each connected to a core network 30. The terminal 20 can communicate with both the base stations 10A and 10B.

The cell group provided by the base station 10A, which is an MN, is called a Master Cell Group (MCG), and the cell group provided by the base station 10B, which is an SN, is called a Secondary Cell Group (SCG). Also, in dual connectivity, the MCG includes a single PCell (Primary SCG Cell) and zero or more SCells, and the SCG includes a single PSCell and zero or more SCells.

The dual connectivity may be a communication method using two communication standards, or may be a communication method combining any communication standards. For example, the combination may be either NR and 6G standards or LTE and 6G standards. In addition, dual connectivity may be a communication method using three or more communication standards, and may be called by another name different from dual connectivity.

The processing operation in the present embodiment may be executed in the system configuration illustrated in Fig. 1, in the system configuration illustrated in Fig. 2, or in any other system configuration.

In the 3GPP standardization, a function of activating/deactivating a secondary cell group in dual connectivity operation is being discussed with the primary objective of reducing the power consumption of terminals. For example, operations that are not performed in a state in which the secondary cell group is deactivated are specified to reduce power consumption.

For example, in a case where the secondary cell group is activated, PDCCH monitoring, Radio Resource Management (RRM) measurement, Radio Link Monitoring (RLM), Beam failure detection/recovery, CSI-RS (Channel State Information-Reference Signal) measurement and reporting, configuration of timing advance, and Sounding Reference Signal (SRS) transmission are performed.

On the other hand, in a case where the secondary cell group is deactivated, for example, PDCCH monitoring, RLM, and SRS transmission need not be performed.

Note that RRM measurements are measurements related to mobility such as handovers and PSCell changes. The RLM is monitoring for detecting DL out-of-synchronization. The beam failure detection/recovery is a function in which the terminal 20 detects beam failure and recovers. The timing advance is information for maintaining UL synchronization.

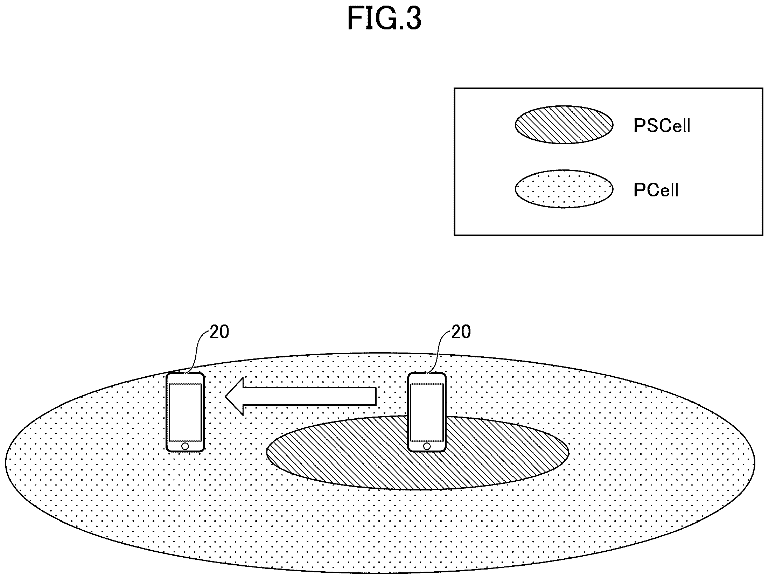

Fig. 3 is a diagram illustrating an example of communication according to dual connectivity. As illustrated in Fig. 3, in a communication in which dual connectivity is applied, in a case where RLM is not performed in a secondary cell group in a deactivated state, the terminal may be located outside the area of the secondary cell group when reactivation of the secondary cell group is performed. Note that the area of PCell corresponds to the area of the master cell group, and the area of PSCell corresponds to the area of the secondary cell group.

In a case where the terminal 20, which has left the area at the cell level during the time when the secondary cell group is in a deactivated state, performs reactivation via a UE trigger, the measurement and selection of SSB (SS/PBCH block) is performed in the conventional technique. In a case where no SSB of a beam is found with a measurement result that exceeds a predetermined threshold, the terminal 20 selects one of the SSBs.

Here, because the terminal 20 has not performed an RLM, there is a possibility that the selected SSB is not necessarily a beam that has quality good enough to allow the random access procedure to be completed, and thus, there is a possibility that the random access procedure may fail. After the failure of the random access procedure and after receiving an indication of the failure, the network operation depends on its implementation, but there is a possibility that the network performs an operation of releasing the secondary cell group, or the like. Because it is assumed that power ramping may be repeated and the excessive retransmission of RACH preambles may occur in response to the failure of the random access procedure by the terminal 20, and thus, there is concern that the delay will be prolonged to the release of the secondary cell group and that power consumption will increase.

Accordingly, when UE-triggered reactivation of the secondary cell group occurs, in a case where the RSRP (Reference Signal Received Power) of all the recently measured SSBs or CSI-RSs does not exceed a predetermined threshold, the terminal 20 may return to the deactivated state or may maintain the deactivated state, without executing the random access procedure by selecting an SSB or CSI-RS. That is, the terminal 20 may cancel the reactivation of the secondary cell group. The predetermined threshold may be configured by the base station 10 or may be defined in advance by technical specifications.

In addition, the terminal 20 may perform the UE-triggered reactivation of the secondary cell group only in a case where the RSRP exceeds the predetermined threshold.

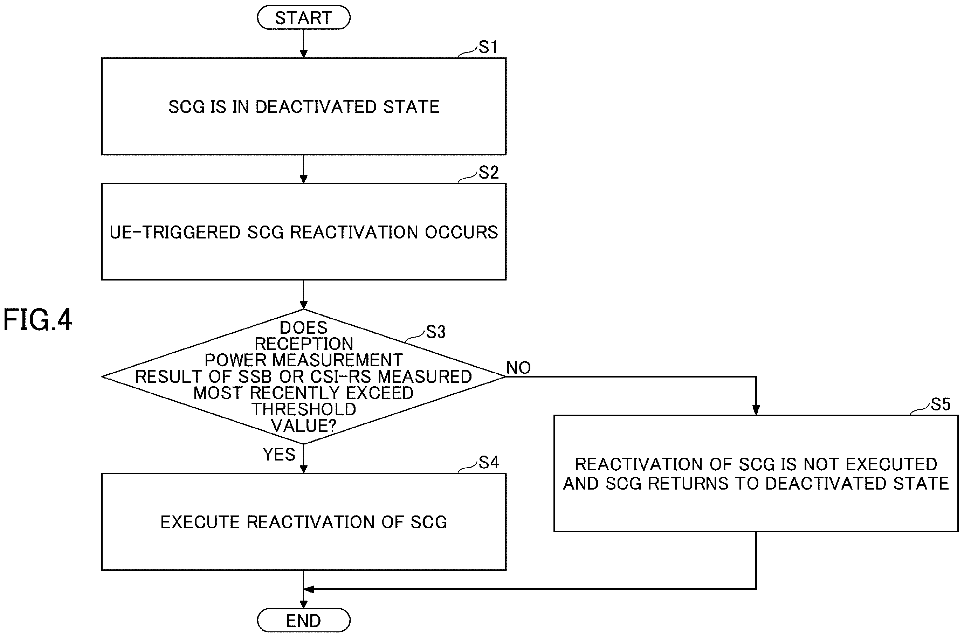

Fig. 4 is a flowchart illustrating an example of operation with respect to a secondary cell group according to an embodiment of the present invention. In step S1, it is assumed that the secondary cell group is in a deactivated state. The deactivated state of the secondary cell group may be indicated by the base station 10. In the subsequent step S2, the UE-triggered reactivation of the secondary cell group occurs.

In the subsequent step S3, the terminal 20 determines whether the reception power measurement result of the most recently measured SSB or CSI-RS exceeds a threshold. The reception power measurement result may be the RSRP of the SSB or CSI-RS in the PSCell. The RSRP may be a different indicator. In a case where the reception power measurement result of the most recently measured SSB or CSI-RS exceeds the threshold (YES in S3), the process proceeds to step S4, and in a case where the reception power measurement result of the most recently measured SSB or CSI-RS does not exceed the threshold (NO in S3), the process proceeds to step S5. Note that the most recently measured time may be a predetermined period ending at the time at which the result is measured, and multiple reception power measurement results may be referenced in step S3.

In step S4, the terminal 20 performs reactivation of the secondary cell group. On the other hand, in step S5, the terminal 20 does not perform reactivation of the secondary cell group and the secondary cell group returns to the deactivated state.

Note that, after step S5, the process may return to step S1. Also, after step S5, the process may return to step S3 for a predetermined period after the UE trigger has occurred or according to the necessity. In a case where, in step S3, the reception power measurement result of the most recently measured SSB or CSI-RS exceeds the threshold, the process proceeds to step S4, and the terminal 20 may perform reactivation of the secondary cell group.

According to the above embodiments, it is possible to avoid the execution of the unnecessary random access procedure and the execution of the unnecessary secondary cell group failure procedure after the failure of the random access procedure.

That is, it is possible to improve the performance during communication according to dual connectivity in a radio communication system.

### (Apparatus configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only some of the functions in one of the proposed embodiments.

### <Base station 10>

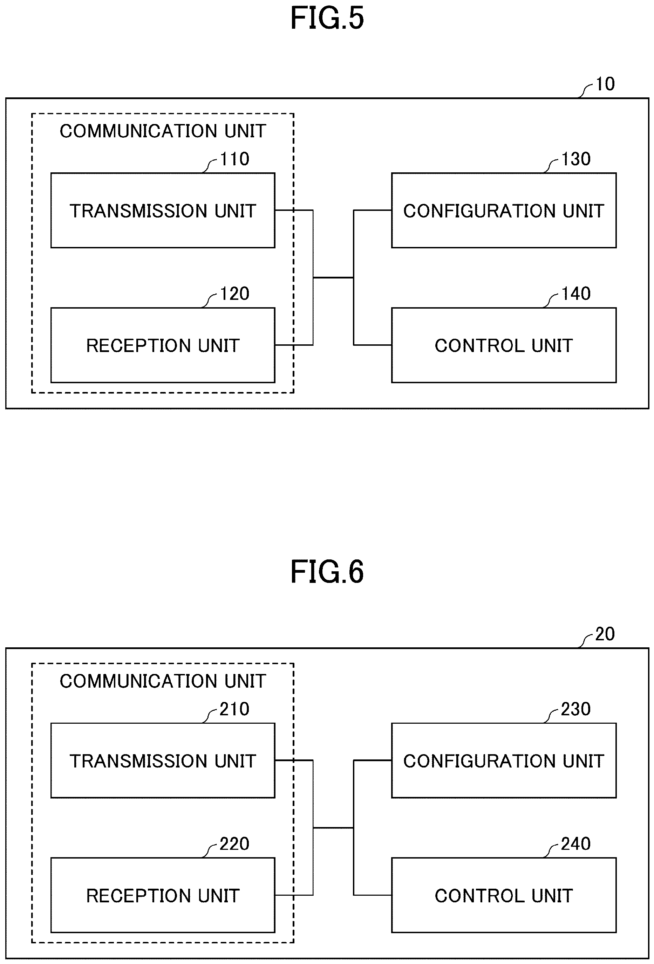

Fig. 5 is a diagram illustrating an example of a functional configuration of the base station 10. As illustrated in Fig. 5, the base station 10 includes a transmission unit 110, a reception unit 120, a configuration unit 130, and a control unit 140. The functional structure illustrated in Fig. 5 is merely an example. Functional divisions and names of functional units may be anything as long as it can perform operations according to an embodiment of the present invention. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function to transmit NR-PSS, NR-SSS, NR-PBCH, DL/UL control signals, DL reference signals, DL data, and the like to the terminal 20. The transmission unit 110 also transmits configuration information, etc., described in the embodiment.

The configuration unit 130 stores preset configuration information and various configuration information items to be transmitted to the terminal 20 in a storage device and reads the preset configuration information from the storage device if necessary. For example, the control unit 140 controls the entire base station 10 including control related to signal transmission and reception. The functional units related to signal transmission in the control unit 140 may be included in the transmission unit 110, and the functional units related to signal reception in the control unit 140 may be included in the reception unit 120. The transmission unit 110 and the reception unit 120 may be referred to as a transmitter and a receiver, respectively.

### <Terminal 20>

Fig. 6 is a diagram illustrating an example of a functional configuration of the terminal 20. As illustrated in Fig. 6, the terminal 20 includes a transmission unit 210, a reception unit 220, a configuration unit 230, and a control unit 240. The functional structure illustrated in Fig. 6 is merely an example. Functional divisions and names of functional units may be anything as long as it can perform operations according to an embodiment of the present invention. The transmission unit 210 and the reception unit 220 may be called a communication unit.

The transmission unit 210 generates a transmission signal from transmission data and transmits the transmission signal wirelessly. The reception unit 220 receives various signals wirelessly and obtains upper layer signals from the received physical layer signals. The transmission unit 210 also transmits HARQ-ACK, and the reception unit 220 receives configuration information and the like described in the embodiment.

The configuration unit 230 stores various configuration information received from the base station 10 or the terminal 20 by the reception unit 220 in the storage device and reads them from the storage device as necessary. Further, the configuration unit 230 also stores pre-configured configuration information. The control unit 240 controls the entire terminal 20, including control related to signal transmission and reception. The functional units related to signal transmission in the control unit 240 may be included in the transmission unit 210, and the functional units related to signal reception in the control unit 240 may be included in the reception unit 220. The transmission unit 210 and the reception unit 220 may be referred to as a transmitter and a receiver, respectively.

### (Hardware structure)

In the above functional structure diagrams used for describing an embodiment of the present invention (Fig. 5 and Fig. 6), functional unit blocks are illustrated. The functional blocks (function units) are realized by a freely-selected combination of hardware and/or software. Further, realizing means of each functional block is not limited in particular. In other words, each functional block may be realized by a single device in which multiple elements are coupled physically and/or logically, or may be realized by two or more devices that are physically and/or logically separated and are physically and/or logically connected (e.g., wired and/or wireless). The functional blocks may be realized by combining the above-described one or more devices with software.

Functions include, but are not limited to, judging, determining, calculating, processing, deriving, investigating, searching, checking, receiving, transmitting, outputting, accessing, resolving, selecting, establishing, comparing, assuming, expecting, and deeming; broadcasting, notifying, communicating, forwarding, configuring, reconfiguring, allocating, mapping, and assigning, etc. For example, a functional block (component) that functions to transmit is called a transmitting unit or a transmitter. In either case, as described above, the implementation method is not particularly limited.

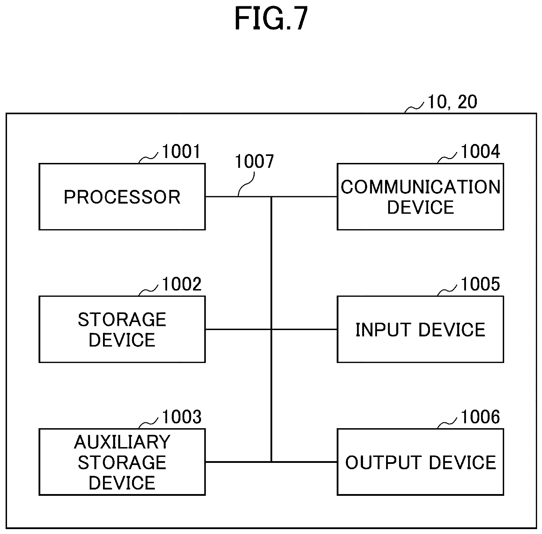

For example, the base station 10, terminal 20, etc., according to an embodiment of the present disclosure may function as a computer for processing the radio communication method of the present disclosure. Fig. 7 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "device" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral device, a control device, a calculation device, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 5 may be realized by control programs that are stored in the storage device 1002 and are executed by the processor 1001. Further, for example, the control unit 240 of the terminal 20 illustrated in Fig. 6 may be realized by control programs that are stored in the storage device 1002 and that are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may comprise a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/reception unit, the transmission line interface, and the like, may be implemented by the communication device 1004. The transmitting/reception unit may be physically or logically divided into a transmission unit and a reception unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the devices including the processor 1001, the storage device 1002, etc., are connected to each other via the bus 1007 used for communicating information. The bus 1007 may include a single bus, or may include different buses between the devices.

Further, each of the base station 10 and terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

### (Summary of embodiments)

As described above, according to an embodiment of the present invention, a terminal is provided. The terminal includes: a communication unit configured to perform communication to which dual connectivity is applied with a base station; a reception unit configured to receive, from the base station, an indication for deactivating a secondary cell group; and a control unit configured to deactivate the secondary cell group, wherein in a case where a terminal-triggered secondary cell group activation occurs, the control unit controls activation of the secondary cell group, based on a measurement result of a most recently measured synchronization signal or reference signal of a primary secondary cell group cell.

With the above configuration, it is possible to avoid the execution of the unnecessary random access procedure and the execution of the unnecessary secondary cell group failure procedure after the failure of the random access procedure. That is, in a radio communication system, performance during communication according to dual connectivity can be improved.

In a case where the measurement result exceeds a predetermined threshold, the control unit may activate the secondary cell group. With this configuration, the execution of the unnecessary random access procedure and the execution of the unnecessary secondary cell group failure procedure after the failure of the random access procedure can be avoided.

In a case where the measurement result does not exceed a predetermined threshold, the control unit need not execute the activation of the secondary cell group. With this configuration, it is possible to avoid the execution of the unnecessary random access procedure and the execution of the unnecessary secondary cell group failure procedure after the failure of the random access procedure.

In addition, according to an embodiment of the present invention, a communication method executed by a terminal is provided. The communication method includes: performing communication to which dual connectivity is applied; receiving, from the base station, an indication for deactivating a secondary cell group; and deactivating the secondary cell group, wherein in a case where a terminal-triggered secondary cell group activation occurs, controlling activation of the secondary cell group, based on a measurement result of a most recently measured synchronization signal or reference signal of a primary secondary cell group cell.

With the above configuration, it is possible to avoid the execution of the unnecessary random access procedure and the execution of the unnecessary secondary cell group failure procedure after the failure of the random access procedure. That is, in a radio communication system, performance during communication according to dual connectivity can be improved.

### (Supplement of embodiments)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described according to an embodiment of the present invention may be changed as long as there is no contradiction. For the sake of description convenience, the base station 10 and the terminal 20 have been described by using functional block diagrams. However, the devices may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication (transmission, notification) may be performed not only by methods described in an aspect/embodiment of the present disclosure but also a method other than those described in an aspect/embodiment of the present disclosure. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in the present disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another device.

A decision or a determination according to the present disclosure may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present disclosure may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present disclosure and/or a term required for understanding of the present disclosure may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macrocell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission device, reception device, communication device, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned) . At least one of the base station and the mobile station may include a device that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to the terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present disclosure may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming," "expecting," or "considering," etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of non-limiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present disclosure does not mean "based on only" unless otherwise specifically noted. In other words, the phrase "base on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above devices may be replaced by "parts," "circuits," "devices," etc.

In the case where the terms "include", "including" and variations thereof are used in the present disclosure, these terms are intended to be comprehensive in the same way as the term "comprising". Further, the term "or" used in the present specification is not intended to be an "exclusive OR".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), a bandwidth, a symbol length, a cyclic prefix length, a transmission time interval (TTI), a number of symbols per TTI, a radio frame configuration, specific filtering processing performed by the transceiver in the frequency domain, and specific windowing processing performed by the transceiver in the time domain.

The slot may include one or more symbols in the time domain, such as OFDM (Orthogonal Frequency Division Multiplexing) symbols, SC-FDMA (Single Carrier Frequency Division Multiple Access) symbols, and the like. The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the UE will not transmit and receive signals/channels outside the activated BWP. It should be noted that the terms "cell" and "carrier" in the present disclosure may be replaced by "BWP".

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in an RB, the number of symbols in a TTI, the symbol length, the cyclic prefix (CP) length, and the like, may change in various ways.

In the present disclosure, where an article is added by translation, for example "a", "an", and "the", the disclosure may include that the noun following these articles is plural.

In the present disclosure, the term "A and B are different" may mean "A and B are different from each other". It should be noted that the term "A and B are different" may mean "A and B are different from C". Terms such as "separated" or "combined" may be interpreted in the same way as the above-described "different".

An aspect/embodiment described in the present disclosure may be used independently, may be used in combination, or may be used by switching according to operations. Further, notification (transmission/reporting) of predetermined information (e.g., notification of "X") is not limited to an explicit notification, and may be performed by an implicit notification (e.g., by not performing notification of the predetermined information).

Although the present disclosure is described above in detail, it is obvious to those skilled in the art that the present disclosure is not limited to the embodiments described in the present disclosure. The present disclosure may be implemented as revised and modified embodiments without departing from the gist and scope of the present disclosure as set forth in claims. Accordingly, the description of the present disclosure is for the purpose of illustration and does not have any restrictive meaning to the present disclosure.

### EXPLANATION OF REFERENCE NUMERALS

- 10: Base station
- 110: Transmission unit
- 120: Reception unit
- 130: Configuration unit
- 140: Control unit
- 20: Terminal
- 210: Transmission unit
- 220: Reception unit
- 230: Configuration unit
- 240: Control unit
- 30: Core network
- 1001: Processor
- 1002: Storage device
- 1003: Auxiliary storage device
- 1004: Communication device
- 1005: Input device
- 1006: Output device

## Claims

1. A terminal, comprising:
a communication unit configured to perform communication to which dual connectivity is applied with a base station;
a reception unit configured to receive, from the base station, an indication for deactivating a secondary cell group; and
a control unit configured to deactivate the secondary cell group, wherein
in a case where a terminal-triggered secondary cell group activation occurs, the control unit controls activation of the secondary cell group, based on a measurement result of a most recently measured synchronization signal or reference signal of a primary secondary cell group cell.

2. The terminal according to claim 1, wherein in a case where the measurement result exceeds a predetermined threshold, the control unit executes the activation of the secondary cell group.

3. The terminal according to claim 1, wherein
in a case where the measurement result does not exceed a predetermined threshold, the control unit does not execute the activation of the secondary cell group.

4. A communication method executed by a terminal, the communication method comprising:
performing communication to which dual connectivity is applied with a base station;
receiving, from the base station, an indication for deactivating a secondary cell group; and
deactivating the secondary cell group, wherein
in a case where a terminal-triggered secondary cell group activation occurs, controlling activation of the secondary cell group, based on a measurement result of a most recently measured synchronization signal or reference signal of a primary secondary cell group cell.
